# EUROPÄISCHE PATENTSCHRIFT

(11) **EP 3 735 630 B1**
(45) Veröffentlichungstag und Bekanntmachung des Hinweises auf die Patenterteilung: **19.04.2023**
(21) Anmeldenummer: 19722078.3
(22) Anmeldetag: 02.05.2019
(51) Int. Cl.: G06F 3/046, G06F 3/0362, G06F 3/0338

(54) **EINGABEGERÄT MIT BETÄTIGUNGSTEIL UND ELEKTROMAGNETISCHER WECHSELFELDBEEINFLUSSUNG ZUR ERMITTLUNG EINER STELLUNGSINFORMATION**
INPUT DEVICE COMPRISING ACTUATION PART AND ELECTROMAGNETIC ALTERNATING-FIELD INFLUENCING FOR DETERMINING POSITION INFORMATION
APPAREIL D'ENTRÉE UTILISANT UNE PARTIE D'ACTIONNEMENT ET UNE INFLUENCE DE CHAMP TRIPHASÉ ÉLECTROMAGNÉTIQUE POUR LA DÉTERMINATION D'UNE INFORMATION DE POSITION

(30) Priorität: 02.05.2018 DE 102018110492
(43) Veröffentlichungstag der Anmeldung: 11.11.2020
(73) Patentinhaber: Preh GmbH, 97616 Bad Neustadt a.d. Saale (DE)
(72) Erfinder: KLEFFEL, Thomas, 97204 Höchberg (DE); BAUER, Norbert, 97616 Bad Neustadt (DE)
(74) Vertreter: Lohmanns, Bernard
(86) Internationale Anmeldenummer: PCT/EP2019/061226
(87) Internationale Veröffentlichungsnummer: WO 2019/211368

(56) Entgegenhaltungen:
- DE-A1-102015 222 783
- JP-A- 2006 122 439
- US-A1- 2001 035 815
- US-A1- 2008 023 232
- US-A1- 2016 224 129
- US-A1- 2017 123 562
- US-A1- 2017 124 364
- US-A1- 2017 182 890
- US-B1- 6 690 156

## Beschreibung

Die Erfindung betrifft ein Eingabegerät einer Fahrzeug-Benutzer-Schnittstelle mit einer Detektionseinrichtung und einem Betätigungsteil, welches beweglich gelagert ist, wobei die Detektionseinrichtung ausgelegt ist, eine Stellung oder eine Stellungsänderung zu detektieren, um dieser wenigstens eine Stellungsänderung zuzuordnen, der einer zum Eingabegerät gehörenden Auswerteinheit übermittelt wird, so dass letztere dieser Information eine Schalt- oder Steuerfunktion einer Fahrzeugkomponente zuordnen kann.

Vorbekannte Eingabegeräte weisen Betätigungsteile auf, die beweglich an einem Gehäuse gelagert sind und deren Position und/oder Positionsänderung berührungslos detektiert wird. Es ist ferner bekannt, ein Betätigungsteil auf einer berührsensitiven Eingabefläche beweglich zu lagern, um die der berührsensitiven Eingabefläche zugeordnete Detektionseinrichtung nicht nur zur Berührdetektion auf der Eingabefläche sondern auch zur Stellungsdetektion des Betätigungsteils verwenden zu können. Gleichzeitig steigert die Verwendung eines beweglich gelagerten Betätigungsteils anstelle einer Fahrzeug-Benutzer-Schnittstelle mit ausschließlich über eine berührsensitiven Eingabefläche möglichen Eingabe, d.h. ein "reines" Touchpad oder ein "reiner" Touchscreen, die Bediensicherheit und den Bedienkomfort, da der Bediener immer noch an herkömmliche Eingabegeräte mit beweglich gelagerten Betätigungsteilen gewöhnt ist und andererseits eine Bedienung auch ohne visuelle Kontrolle und damit ohne Ablenkung vom Verkehrsgeschehen durch Ergreifen des Betätigungsteils und damit erfolgendem haptischem Feedback durchführbar ist. Bisherige Ansätze dieses letzten Prinzips machten sich bisher die kapazitive Berührdetektion zu Nutze, indem das auf einem kapazitiven Touchscreen oder kapazitiven Touchpad angeordnete Betätigungsteil mit der jeweiligen Messkapazität wechselwirkte. Es hat sich aber gezeigt, dass diese Technologie störanfällig gegenüber Fremdkörpern, wie Flüssigkeiten, ist und darüber hinaus den Nachteil aufweist, dass die Stellungsdetektion nicht zuverlässig genug durchgeführt werden kann, insbesondere wenn es darum geht kleine Positionsänderungen, wie Schwenkstellungsänderungen, des Betätigungsteils zu detektieren und ferner viele Kalibrierungsschritte im Betrieb notwendig waren, um eine zuverlässige Funktion zu garantieren. Im Auto hat sich die kapazitive Detektion aufgrund von Störfeldern oder aufgrund einer statischen Aufladung des Bedieners als störanfällig erwiesen. Darüber hinaus ist bei einer kapazitiven Detektion eine Bedienung mittels eines behandschuhten Fingers nicht möglich.

Die US 2017/182890 A1 offenbart ein Eingabegerät, insbesondere einer Fahrzeug-Bediener-Schnittstelle, aufweisend ein Touchpad, ein an dem Touchpad beweglich gelagrtes Betätigungsteil und eine am Touchpad angeordnete Detektionseinrichtung, welche eine Sendeeinrichtung zur Erzeugung eines elektromagnetischen Wechselfeldes aufweist, und eine mit der Detektionseinrichtung elektrisch leitend verbundene Auswerteinheit, wobei die Auswerteinheit ausgelegt ist, anhand wenigstens eines Empfangssignals ein stellungsabhängiges Absorptionsverhalten oder ein stellungsabhängiges Abstrahlverhalten des Schwingkreises zu detektieren und daraus eine Stellungsinformation betreffend die Stellung des Betätigungsteils zu vermitteln und wobei die Auswerteinheit ausgelegt ist, in Abhängigkeit der Stellungsinformation eine Schalt- und/oder Steuerfunktion durchzuführen.

Gattungsgemäße Eingabegeräte sind ferner aus der DE 10 2015 222 783 A1, US 2017/124364 A1, US 2017/123562 A1, US 6 690 156 B1, US 2008/023232 A1, JP 2006 122439 A, US 2001/035815 A1 sowie US 2016/224129 A1 bekannt.

Vor diesem Hintergrund bestand Bedarf nach einer Lösung für ein Eingabegerät mit im Vergleich zuverlässigerer, berührungslos arbeitender Stellungsdetektion, welche insbesondere kostengünstig hergestellt werden kann und deren Funktionssicherheit verbessert dauerhaft sichergestellt werden kann. Diese Aufgabe wird durch ein Eingabegerät gemäß Anspruch 1 gelöst. Ein gleichermaßen vorteilhaftes Verfahren zum Betrieb eines Eingabegeräts ist Gegenstand des nebengeordneten Verfahrensanspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Eingabegerät insbesondere für eine Fahrzeug-Benutzer-Schnittstelle. Die Fahrzeug-Benutzer-Schnittstelle im Sinne der Erfindung meint eine Einrichtung zur Vornahme von Steuerungseingaben betreffend das Fahrzeug oder Fahrzeugkomponenten. Als Benutzer, auch Bediener genannt, wird unter anderem der Fahrer des Fahrzeugs verstanden. Neben dem erfindungsgemäßen Eingabegerät sind in der Regel weitere zur Vornahme von manuellen Eingaben geeignete Eingabegeräte oder Komponenten zur Visualisierung von Zuständen auf.

Das Eingabegerät weist erfindungsgemäß ein Touchpad und eine an dem Touchpad angeordnete Detektionseinrichtung auf. Der Begriff "Touchpad" ist dabei weit auszulegen und ist auf Bedieneinrichtungen mit berührempfindlicher Eingabefläche im Allgemeinen gerichtet, d.h. mit dem Begriff "Touchpad" sollen somit anzeigelose Eingabegerät mit berührempfindlicher Eingabefläche als auch solche Eingabegeräte umfasst sein, die eine berührempfindliche Eingabefläche mit einer Anzeige kombinieren, wie sogenannte Touchscreens. Das Touchpad ist dabei in der Regel an einer Innenraumverkleidung oder dem Armaturenbrett festgelegt. Das Eingabegerät weist ferner eine mit der Detektionseinheit elektrisch leitend verbundene Auswerteinheit auf. Das Eingabegerät weist ferner ein an dem Touchpad beweglich, wie dreh-, schwenk- und/oder schiebebeweglich, gelagertes Betätigungsteil auf. Bevorzugt ist das Betätigungsteil mindestens drehbeweglich gelagert. Bevorzugt ist ein Sockel vorgesehen, der an dem Touchpad, beispielsweise durch kraft-, stoff- und/oder stoffschlüssige Verbindung, befestigt ist und an dem das Betätigungsteil seinerseits beweglich gelagert ist. Beispielsweise ist die Verbindung zwischen dem Sockel und dem Touchpad lösbar ausgestaltet, um unter anderem das Betätigungsteil samt Sockel entfernen zu können oder eine Lageveränderung des Betätigungsteils auf dem Touchpad vornehmen zu können.

Die Detektionseinrichtung weist eine Sendeeinrichtung zur Erzeugung eines elektromagnetischen Wechselfeldes mittels eines Sendesignals sowie eine Empfangseinrichtung zum Empfang des ausgesandten Wechselfeldes aus. Sendeeinrichtung und Empfangsrichtung müssen nicht konstruktiv voneinander unabhängig sein, beispielsweise ist die Nutzung einer gemeinsamen Antennenstruktur oder gar der durch das Touchpad bereitgestellten Elektrodenstruktur denkbar.

Erfindungsgemäß ist ein im elektromagnetischen Wechselfeld angeordneter, elektrischer Schwingkreis, aus beispielsweise mindestens einem elektrischen Kondensator und einer elektrischen Spule als Schwingkreiselemente vorgesehen. Erfindungsgemäß ist das Betätigungsteil ausgebildet, die Resonanzfrequenz des elektrischen Schwingkreises stellungsabhängig zu variieren, indem Betätigungsteil und Schwingkreis zusammenwirken. Beispielsweise ist das Zusammenwirken elektrisch oder elektromechanisch oder mechanisch. Die Variation der Resonanzfrequenz ergibt sich bevorzugt daraus, dass der elektrische Schwingkreis stellungabhängig geschlossen oder geöffnet wird. Bevorzugter weist der elektrische Schwingkreis ein elektromechanisches Schaltelement auf, welches durch mechanisches Zusammenwirken zwischen Betätigungsteil und elektromechanischem Schaltelement seinen Schaltzustand ändert und damit der elektrische Schwingkreis geöffnet oder geschlossen wird.

Erfindungsgemäß ist die Auswerteinheit ausgelegt, anhand wenigstens des Empfangssignals, je nach Ausführungsform sowohl durch Empfangssignal als auch durch Sendesignal, ein stellungsabhängiges Absorptionsverhalten betreffend das elektromagnetische Wechselfeld oder ein stellungsabhängiges Abstrahlverhalten des Schwingkreises aufgrund eines mittels des elektromagnetischen Wechselfeldes induzierten Stromes im Schwingkreis zu detektieren und daraus eine Stellungsinformation betreffend die Stellung des Betätigungsteils zu ermitteln. Anders ausgedrückt, die Stellungsinformation wird in einer Ausgestaltung anhand eines Sendesignals ermittelt, welches vom Schwingkreis durch Induktion abgestrahlt wird oder aus dem charakteristischen Leistungsentzug ermittelt, welcher der Schwingkreis dem ursprünglichen elektromagnetischen Wechselfeld entzieht. Erfindungsgemäß ist somit die Auswerteinheit befähigt, in Abhängigkeit der Stellungsinformation eine Schalt- und/oder Steuerfunktion einer Fahrzeugkomponente durchzuführen. Bevorzugt wird das stellungsabhängige Absorptionsverhalten und damit die Stellungsinformation durch Vergleich von Empfangs- und Sendesignal erhalten, indem insbesondere deren Amplitude und/oder deren Phase verglichen wird. Beispielsweise wird wenigstens aus dem Empfangssignal die Resonanzfrequenz des Schwingkreises ermittelt. Beispielweise wird in Abhängigkeit der Position des Betätigungsteils eine Temperaturvorwahl der Klimasteuerung des Fahrzeugs vorgenommen. Durch Verwendung eines elektromagnetischen Wechselfeldes kann die Bedieneingabe störunanfälliger, beispielsweise im Vergleich zu einer auf kapazitiven Detektionsmitteln basierenden Bedieneingabe durchgeführt werden.

Hinsichtlich seiner weiteren Beweglichkeiten und Freiheitsgrade ist das Betätigungsteil nicht eingeschränkt, so ist bevorzugt zusätzlich eine schwenkbewegliche Lagerung des Betätigungsteils vorgesehen. Beispielswiese ist eine kardanische Lagerung oder eine Kugel-Pfannen-Lagerung zwischen Touchpad und Betätigungsteil vorgesehen. Ferner ist gemäß einer weiteren Ausgestaltung eine mit der Drehbeweglichkeit kombinierte Schiebebeweglichkeit vorgesehen, bei der die Richtung der Schiebebeweglichkeit mit der Drehachse der Drehbeweglichkeit zusammenfällt. Diese Schiebebeweglichkeit wird auch als Push-Beweglichkeit bezeichnet. Bei dieser Push-Beweglichkeit ist das Betätigungsteil beispielsweise so gelagert, dass es aus einer Ruhestellung entgegen einer Rückstellkraft aus einer Ruhestellung in eine gedrückte Stellung bewegbar ist, um dieser Betätigung eine zusätzliche Schaltfunktion zuzuordnen. Dabei können optional Mittel zur Detektion der Betätigungskraft vorgesehen sein.

Bevorzugt weist die Detektionseinrichtung ein Array aus der das elektromagnetische Wechselfeld erzeugenden Antennen (Spulen), die als Sendeantennenstruktur bezeichnet wird, auf. Beispielsweise ist die Sendeantennenstruktur in einer ebenen Fläche benachbart zu einer Oberfläche des Gehäuses angeordnet. Durch die Anordnung einer aus mehreren Sendeantennen bestehender Struktur lässt sich verbessert eine ortsauflösende Detektion der Lage des Betätigungsteils bezüglich des Touchpads realisieren.

Bevorzugt wird anhand eines Frequenzverhaltens eines Amplitudenverhältnisses zwischen Sendesignal und Empfangssignal und/oder der Phasenverschiebung zwischen Sendesignal und Empfangssignal eine Stellungsinformation mittels der Auswerteinheit ermittelt. Dadurch kann die Zuverlässigkeit der Detektion gesteigert werden, da eine vorbekannte frequenzabhängige Beeinflussung durch den Drehsteller von anderen Störeinflüssen, wie Flüssigkeitstropfen am Betätigungsteil, anhand des Frequenzverhaltens diskriminiert werden können. Beispielsweise handelt es sich um eine Abfolge monofrequenter Signale unterschiedlicher Frequenz die in ihrer zeitlichen Abfolge ausgewertet werden oder um multifrequente Signale, die spektral ausgewertet werden, um so eine frequenzabhängige Auswertung zu erreichen. Um das Touchpad, insbesondere den Touchscreen, vor Beschädigungen zu bewahren, beträgt die maximale Abstrahlleistung des elektromagnetischen Wechselfeldes bevorzugt weniger als 10mW, bevorzugter weniger als 5mW, meist bevorzugt weniger als 1mW. In einer kostengünstigsten Variante ist genau eine Sendeantenne, bzw. Spule vorgesehen, die benachbart des elektrischen Schwingkreises beispielsweise benachbart der zu einer dem Schwingkreis zugehörigen Spule angeordnet. In einer Ausgestaltung sind die Antennen bzw. Spulen der Sendeantennenstruktur selektiv ansteuerbar, um ferner die Lage des jeweils geschlossenen Schwingkreis und damit die Lage des Betätigungsteils ortsaufgelöst auf dem Touchpad zu detektieren. Letztere Ausführungsform ist bevorzugt, um das Betätigungsteil an beliebiger Stelle auf dem Touchpad anordnen zu können.

Erfindungsgemäß ist vorgesehen, dass das zuvor erwähnte, elektromechanische Schaltelement zur Schleifkontaktierung ausgebildet ist, so dass stellungsabhängig der elektrische Schwingkreis geschlossen oder unterbrochen wird. Erfindungsgemäß ist ein Schleifer vorgesehen, der bei der und synchron zu einer Verstellung des Betätigungsteil auf und über eine Kontaktfläche hinweg verfahren wird, um bei sich einstellendem Berührkontakt den Schwingkreis zu schließen.

Bevorzugt sind mehrere Schwingkreiselemente vorgesehen sind und es ist ferner vorgesehen, dass das Betätigungsteil und der elektrische Schwingkreis derart zusammenwirken, dass wenigstens zwei benachbarte Stellungen des Betätigungsteils vorgesehen sind, in denen jeweils unterschiedliche elektrische Schwingkreise geschlossen sind, die sich wenigstens bezüglich einer Impedanz eines Schwingkreiselements der jeweils zu einem Schwingkreis elektrisch verbundenen Schwingkreiselemente unterscheiden. Bevorzugt wird die Impedanz eines kapazitiven Schwingkreiselements variiert. Beispielsweise weisen die unterschiedlichen Schwingkreise dieselbe Induktivität in Form einer Spule auf, die insbesondere aber nicht zwingend auf der Drehachse des Betätigungsteils angeordnet ist, und es werden in den Stellungen bezüglich ihrer Kapazität unterschiedliche Kondensatoren oder unterschiedliche Kombinationen von Kondensatoren verschaltet. Bevorzugt ist die Verschaltung derart, dass jede der möglichen Stellungen anhand der Impedanz des Schwingkreises identifizierbar ist. Beispielsweise wird hierzu eine Gray-Codierung mit einer mehrfachen Schleifkontaktierung verwendet. Bevorzugt sind entlang des möglichen Verstellwegs des Betätigungsteils mehrere gleichmäßig verteilt angeordnete Stellungen vorgesehen.

Bevorzugt sind die Stellungen des Betätigungsteils durch eine Rasteinrichtung definiert. Beispielsweise umfasst die Rasteinrichtung eine Rastkontur und eine in die Rastkontur eingreifende Rastnase, um beim händischen Verstellen des Betätigungsteils eine für den Bediener merkbare Rasthaptik zu erzeugen. Bevorzugt ist die Rasteinrichtung so ausgelegt, dass beim Übergang der Rastnase von einer Rastvertiefung in eine benachbarte Rastvertiefung der Rastkontur jeweils wenigstens ein Schwingkreis seinen elektrischen Zustand von geöffnet zu geschlossen oder umgekehrt wechselt. Beispielsweise ist die Rastnase der Rasteinrichtung und der Schleifer der Schleifkontaktierung einstückig ausgebildet.

Gemäß einer bevorzugten Ausgestaltung weist die Sendeeinrichtung ein Array von selektiv ansteuerbaren Sendeantennen und/oder die Empfangseinrichtung ein Array von selektiv ansteuerbaren Empfangsantennen auf und die Detektionseinheit ist ausgelegt, mittels selektiver Ansteuerung die Stellungsinformation zu ermitteln. Somit ist das Eingabegerät aufgrund der räumlichen Verteilung der Sende- bzw. Empfangsantennen eine ortsauflösende Ermittlung des Amplitudenverhältnisses bzw. der Phasenverschiebung durchzuführen, was die Genauigkeit der Stellungsdetektion steigert. Beispielsweise kann die Ansteuerung so ausgelegt sein, dass die Antennen entsprechend der zuvor detektierten Stellung des Betätigungsteils selektiert werden, so dass die zur Detektion verwendeten Antennen der jeweiligen Stellung des Betätigungsteils "nachgeführt" werden.

Die Erfindung betrifft ferner die Verwendung des Eingabegeräts in einer seiner zuvor beschriebenen Ausführungsformen in einem Kraftfahrzeug.

Die Erfindung betrifft ferner ein Verfahren zum Betrieb eines Eingabegeräts, insbesondere einer Fahrzeug-Benutzer-Schnittstelle, mit den folgenden Schritten:
In einem Bereitstellungsschritt wird das Eingabegerät bereitgestellt, welches ein Touchpad, ein an dem Touchpad beweglich gelagertes Betätigungsteil und eine am Touchpad angeordnete Detektionseinrichtung aufweist. Die Detektionseinrichtung weist eine Sendeeinrichtung zur Erzeugung eines elektromagnetischen Wechselfeldes mittels eines Sendesignals und eine Empfangseinrichtung zum Empfang des elektromagnetischen Wechselfeldes unter Erzeugung eines Empfangssignals auf. Es wird ferner eine mit der Detektionseinrichtung elektrisch leitend verbundenen Auswerteinheit bereitgestellt. Es ist ferner ein im elektromagnetischen Wechselfeld angeordneter, elektrischer Schwingkreis vorgesehen. Dabei ist das Betätigungsteil ausgebildet, eine Resonanzfrequenz des elektrischen Schwingkreises stellungsabhängig zu variieren, indem beispielsweise Betätigungsteil und Schwingkreis derart zusammenwirken, dass die Resonanzfrequenz des Schwingkreises in Abhängigkeit der Stellung des Betätigungsteils variiert wird und/oder der Schwingkreis geschlossen oder geöffnet wird. In einem Detektionsschritt wird mittels der Auswerteinheit anhand wenigstens des Empfangssignals ein Absorptionsverhalten oder ein Abstrahlverhalten des Schwingkreises detektiert, insbesondere dessen Resonanzfrequenz festgestellt. Dabei wird das Absorptionsverhalten des Schwingkreises bezüglich des elektromagnetischen Wechselfeldes festgestellt oder ein stellungsabhängiges Abstrahlverhalten des Schwingkreises aufgrund eines in dem Schwingkreis induzierten Stromes festgestellt. In einem Ermittlungsschritt wird eine Stellungsinformation betreffend die Stellung des Betätigungsteils durch die Auswerteinheit ermittelt. In einem Ausführschritt wird eine Schalt- und/oder Steuerfunktion beispielsweise einer Fahrzeugkomponente in Abhängigkeit der Stellungsinformation vorgenommen.

Weitere zuvor beschriebene, sich auf Ausführungsformen des Eingabegeräts beziehende Merkmale können gleichermaßen Ausgestaltungen des erfindungsgemäßen Verfahrens betreffen.

Die Erfindung wird anhand der nachfolgenden Figuren näher erläutert. Die Figuren sind dabei nur beispielhaft zu verstehen und stellen lediglich eine bevorzugte Ausführungsvariante dar. Es zeigen:
Fig. 1 eine perspektivische Ansicht des erfindungsgemäßen Eingabegeräts 1 einer Fahrzeug-Benutzer-Schnittstelle 10;
Fig. 2 eine Prinzipskizze zur Erläuterung der Funktionsweise des zur Fahrzeug-Benutzer-Schnittstelle 10 aus Fig. 1 gehörigen Eingabegeräts 1;
Fig. 3 eine Darstellung einer konstruktiven, nicht-efindungsgemäßen Ausgestaltung zur Variation der elektrischen Impedanz eines der zum Eingabegerät 1 aus Fig. 1 gehörigen Schwingkreiselements;
Fig. 4 eine Darstellung einer weiteren konstruktiven, nicht erfindungsgemäßen Ausgestaltung zur Variation der elektrischen Impedanz eines der zum Eingabegerät 1 aus Fig. 1 gehörigen Schwingkreiselements;
Fig. 5a eine Darstellung noch einer weiteren konstruktiven, nichterfindungsgemäßen Ausgestaltung zur Variation der elektrischen Impedanz eines der zum Eingabegerät 1 aus Fig. 1 gehörigen Schwingkreiselements;
Fig. 5b eine Darstellung einer weiteren konstruktiven, nichterfindungegemäßen Ausgestaltung zur Variation der elektrischen Impedanz eines der zum Eingabegerät 1 aus Fig. 1 gehörigen Schwingkreiselements;
Fig. 6 eine Darstellung einer weiteren konstruktiven Ausgestaltung zur Variation der Beeinflussung des Feldwiderstandes mittels Änderung eines Schaltzustandes des zum Eingabegerät 1 aus Fig. 1 gehörigen Schwingkreises;
Fig. 7 eine Prinzipskizze einer weiteren Ausführungsform des erfindungsgemäßen Eingabegeräts;
Fig. 8 eine perspektivische Schnittdarstellung einer weiteren Ausführungsform des erfindungsgemäßen Eingabegeräts.

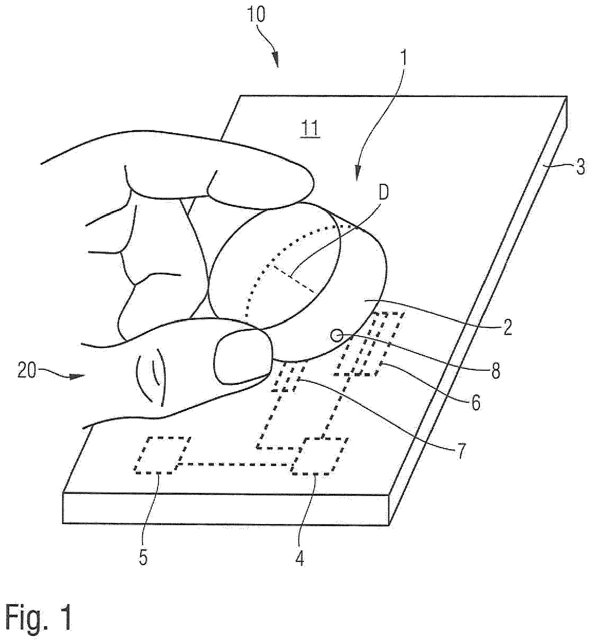

Figur 1 zeigt eine Ausführungsform der erfindungsgemäßen, zu einer Fahrzeug-Benutzer-Schnittstelle 10 gehörigen Eingabegeräts 1. Das Eingabegerät 1 weist ein Touchpad 3 auf, welches eine berührempfindliche Eingabefläche 11 definiert auf der ein Betätigungsteil 2 drehbeweglich gelagert ist. Das Touchpad 3 kann eine Anzeige beinhalten und wird dann als Touchscreen bezeichnet. Die berührempfindliche Eingabefläche 11 ist dem Bediener zugewandt und auf dieser Eingabefläche 11 ist das Betätigungsteil 2 drehbeweglich um die Achse D und damit an dem Touchpad 3 mittels nicht näher dargestellter Lagerungsmittel gelagert. Benachbart zur Eingabefläche 11 des Touchpads 3 ist eine Detektionseinrichtung 4, 6, 7 vorgesehen. Die Detektionseinrichtung 4, 6, 7 weist ein Array aus durch die Detektionseinrichtung 4, 6, 7 ansteuerbare Sendeantennen 6 auf, die in einer spezifischen Struktur, beispielsweise in einer Gitterstruktur angeordnet sind und der Abstrahlung eines elektromagnetischen Wechselfeldes unter Erzeugung eines Sendesignals dienen. Die Detektionseinrichtung 4, 6, 7 weist ferner ein Array aus Empfangsantennen 7 auf, um das elektromagnetische Wechselfeld zu empfangen und zur Generierung eines Empfangssignals. Die Detektionseinrichtung 4, 6, 7 ist ferner mit einer Auswerteinheit 5 zur Übermittlung und Auswertung wenigstens des Empfangssignals elektrisch verbunden. Dem Betätigungsteil 2 ist ferner ein elektrischer Schwingkreis 8 aus mehreren in Figur 1 nicht näher dargestellten Schwingkreiselementen zugeordnet, der so ausgebildet und/oder angeordnet ist, dass wenigstens anhand des Empfangssignals dessen stellungsabhängiges Absorptionsverhalten oder dessen stellungsabhängiges Abstrahlverhalten detektierbar ist und daraus eine Stellungsinformation des Betätigungsteils 2 ermittelbar ist, beispielsweise anhand eines Amplitudenverhältnisses von Empfangssignal und Sendesignal und/oder einer Phasenverschiebung zwischen Empfangssignal und Sendesignal. Auch wenn der in Figur 1 lediglich symbolisch dargestellte, elektrische Schwingkreis 8 dem Betätigungsteil 2 zugeordnet ist, muss dies nicht zwingend vorgesehen sein. Letztlich soll dadurch lediglich die der Resonanzfrequenz betreffende Beeinflussung zwischen Betätigungsteil 2 und Schwingkreis 2 symbolisiert sein. Damit ist die Auswerteinheit 5 in der Lage, in Abhängigkeit der Stellungsinformation eine Schalt- und/oder Steuerfunktion insbesondere einer Fahrzeugkomponente durchzuführen.

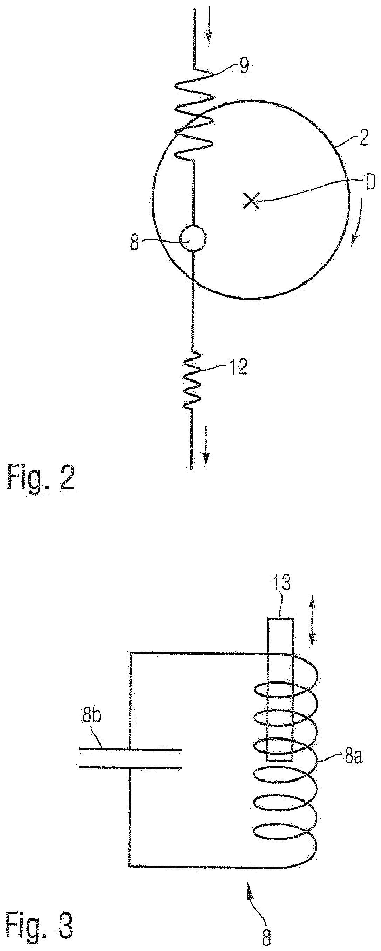

Das Prinzip dieser stellungsabhängigen Beeinflussung der Resonanzfrequenz und damit der Beeinflussung des Absorptionsverhaltens des Schwingkreises bezüglich des elektromagnetischen Wechselfeldes oder des Abstrahlverhaltens des Schwingkreises aufgrund des durch das elektromagnetische Wechselfeld induzierten Stromes ist in Figur 2 gezeigt. Der Schwingkreis 8 kann ganz oder zumindest teilweise dem Betätigungsteil 2 zugeordnet sein, d.h. an dem Betätigungsteil 2 befestigt sein. Wie die Figur 2 zeigt, wird seitens der Auswerteinheit 5 die Stellungsinformation des Betätigungsteils 2 aus dem Amplitudenverhältnis von Empfangssignal 12 und Sendesignal 9 und/oder der Phasenverschiebung zwischen Empfangssignal 12 und Sendesignal 9 ermittelt. Um Beeinflussung durch Störung von einer gewollten Beeinflussung durch den Schwingkreis 8 unterscheiden und diskriminieren zu können, erfolgt diese Auswertung unter Verwendung mehrerer Sendesignale, die sich in der Frequenz oder in ihrer spektralen Zusammensetzung unterscheiden, wobei die Auswertung bezüglich mehrerer unterschiedlicher Frequenzen durch bekannte frequenzanalytische Verfahren durchgeführt wird. Beispielsweise wird ein sogenannter Chirp, weißes oder graues Rauschen als Sendesignal verwendet.

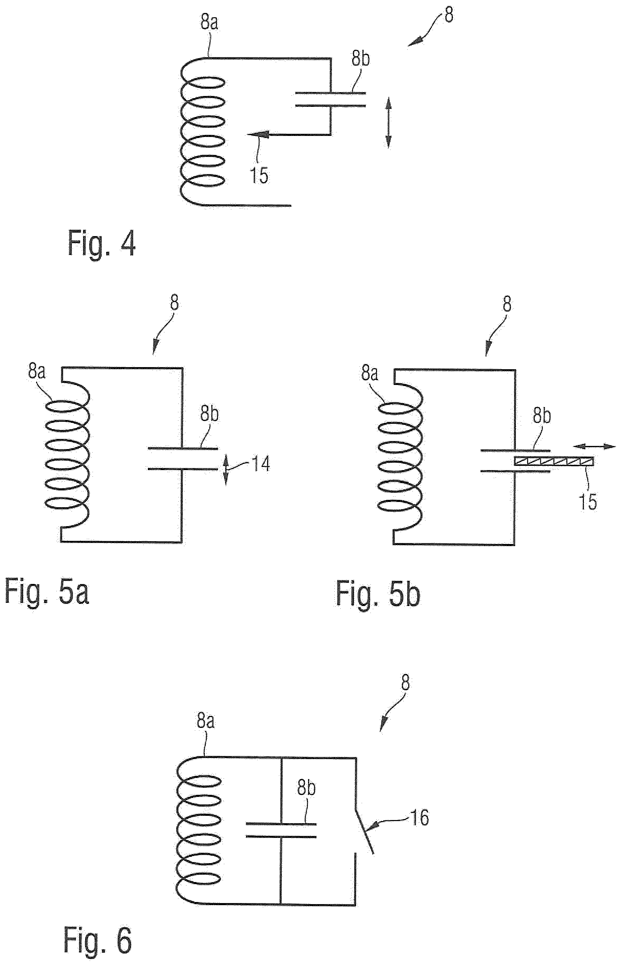

In einfachen Ausgestaltungen des Eingabegeräts 1 variiert die Leistungsentnahme des Schwingkreises 8 mit dem Verdrehen des Betätigungsteils 2 lediglich aufgrund der durch das Verdrehen bewirkten Impedanzänderung wenigstens eines Schwingkreiselements des Schwingkreises 8, wobei sich das Schwingkreiselement in dem durch das Sendesignal 9 erzeugten elektromagnetischen Wechselfeld befindet, so dass die dadurch bewirkte Änderung des Empfangssignals in Bezug auf Amplitude und gegebenenfalls Phase eine eindeutige Ermittlung der Stellung ermöglicht. Beispiele hierzu sind solche Ausführungen des Eingabegeräts 1, wie sie in den Figuren 3 bis 6 gezeigt werden, bei denen durch ein stellungsabhängiges mechanisches Einwirken auf den Schwingkreis dessen Abstimmung variiert wird wie in Figur 6 gezeigt oder insbesondere bei denen die elektrische Impedanz wenigstens eines der Schwingkreiselemente 8a oder 8b und damit die Resonanzfrequenz des Schwingkreises 8 variiert wird, wie es in den Figuren 3 bis 5b gezeigt ist.

In Figur 3 ist eine nicht-erfindungsgemäße Ausführungsform mit stellungsabhängiger Variation der Induktivität, d.h. der elektrischen Impedanz der Spule 8a, gezeigt. Durch Verdrehen des Betätigungsteils 2 aus Figur 1 wird die Lage des in der Spule 8a befindlichen ferromagnetischen Kerns 13 verändert. Dabei ist der Schwingkreis 8 bis auf den ferromagnetischen Kern 13 bevorzugt am Gehäuse 3 festgelegt, wobei während der Stellungsänderung des Betätigungsteils 2 der Kern 13 synchron mit dem Betätigungsteil 2 mitbewegt wird.

In Figur 4 ist eine nicht-erfindungsgemäße Ausführungsform gezeigt, bei der der Schwingkreis 8 durch stellungsabhängige Variation des Abgriffs 15 der Spule 8a abgestimmt wird, und somit der Leistungsentzug des elektromagnetischen Wechselfelds durch die induktive Schwingungsanregung des Schwingkreises 8 ein Maß für die Stellung des Betätigungsteils 2 ist, welches anhand des Absorptionsverhaltens und/oder des Abstrahlverhaltens durch die Auswerteinheit 5 ermittelbar ist.

In den Figuren 5a und 5b sind nicht-erfindungsgemäße Ausführungsformen gezeigt, bei der der Schwingkreis 8 durch stellungsabhängige Variation der Kapazität als elektrische Impedanz des Kondensators 8b abgestimmt wird. In der Ausführungsform gemäß Figur 5a wird durch mechanische Einwirkung des Betätigungsteils 2 auf die Platten des Kondensators 8b deren Plattenabstand 14 oder allgemeiner deren relatives Anordnungsverhältnis verändert, um die Kapazität des Kondensators 8b und damit dessen elektrische Impedanz stellungsabhängig zu variieren, wohingegen in der Ausführungsform gemäß Figur 5b durch mechanisches Zusammenwirken von dem Betätigungsteil 2 und einem in dem Kondensator 8b eingebrachten Dielektrikum 15 die Lage dieses Dielektrikums 15 bezüglich des durch die Platten des Kondensators 8b definierten Hohlraums variiert wird.

In Figur 6 ist in dem Schwingkreis ein mechanisches Schaltelement 16 vorgesehen, dessen Schaltzustände durch mechanisches Zusammenwirken mit dem Betätigungsteil 2 stellungsabhängig veränderbar sind, um so die Abstimmung des Schwingkreises 8 in Abhängigkeit des Schaltzustandes des Schaltelements 16 und damit in Abhängigkeit der Stellung des Betätigungsteils 2 zu variieren, was wiederum durch die Auswerteinheit 5 anhand des Absorptionsverhaltens oder des Abstrahlverhaltens, beispielsweise aus dem Amplitudenverhältnis und/oder der Phasenverschiebung zwischen Empfangssignal 12 und Sendesignal 9, gemäß der Funktionsskizze der Figur 2 ermittelbar ist.

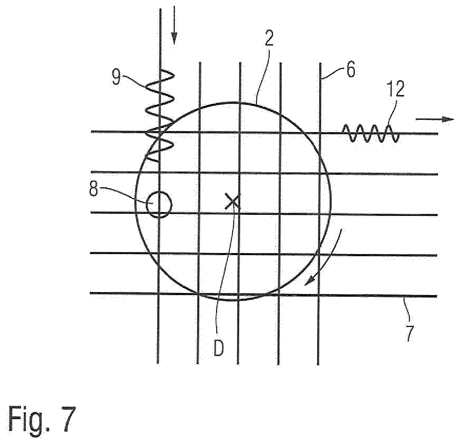

Figur 7 zeigt eine weitere Ausführungsform bei der die Sendeeinrichtung 6 ein Array von selektiv ansteuerbaren Sendeantennen und die Empfangseinrichtung 7 ein Array von selektiv ansteuerbaren Empfangsantennen aufweist und wobei die Detektionseinheit 4 ausgelegt ist, mittels selektiver Ansteuerung dieser Antennen die Stellungsinformation zu ermitteln. Somit ist das Eingabegerät 1 aufgrund der räumlichen Verteilung der Sende- bzw. Empfangsantennen eine ortsauflösende Ermittlung des stellungsabhängigen Absorptionsverhaltens bzw. des stellungsabhängigen Abstrahlverhaltens durchzuführen, was die Genauigkeit der Stellungsdetektion steigert. Beispielsweise kann die Ansteuerung so ausgelegt sein, dass die Antennen entsprechend der zuvor detektierten Stellung des Betätigungsteils 2 entsprechend ihres Abstands zur zuletzt detektierten Stellung des Betätigungsteils 2 selektiert werden, so dass die zur Detektion verwendeten Antennen der jeweiligen Stellung des Betätigungsteils 2 "nachgeführt" werden.

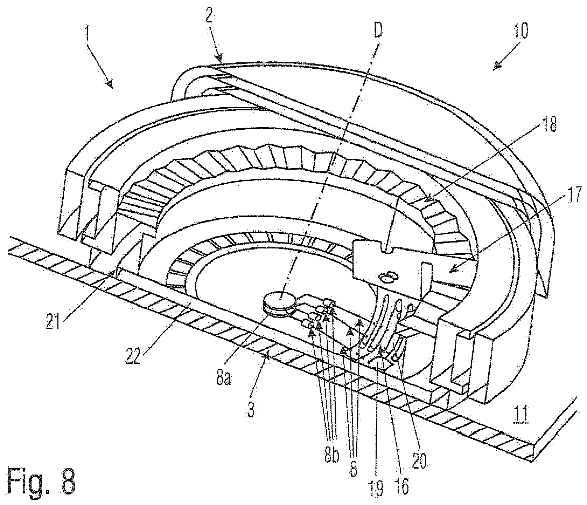

Figur 8 zeigt eine weitere Ausführungsform des erfindungsgemäßen Eingabegeräts 1 einer Fahrzeug-Benutzer-Schnittstelle, bei dem die Resonanzfrequenz des elektrischen Schwingkreises 8 stellungsabhängig dadurch variiert wird, dass stellungsabhängig einer der Schwingkreise 8 durch ein elektromechanisches Schaltelement 16 geschlossen oder unterbrochen wird, insbesondere stellungsabhängig unterschiedliche elektrische Schwingkreise 8 geschlossen bzw. geöffnet werden. Bei der Ausführungsform ist ein Betätigungsteil 2 über einen Sockel 21 auf einer Eingabefläche 11 eines Touchpads 3, welches durch eine zusätzliche elektronische Pixelmatrixanzeige auch ein Touchscreen sein kann, drehbeweglich gelagert. Der Sockel 21 ist dabei am Touchpad 3 festgelegt, wobei diese Verbindung lösbar ausgebildet sein kann, um das Betätigungsteil 2 samt Sockel 21 entfernen zu können oder um eine Lageveränderung des Betätigungsteils 2 auf der Eingabefläche 11 vornehmen zu können. Im vorliegenden Fall ist jedem Schwingkreis 8 genau eine Spule 8a gemeinsam, die auf einer Drehachse D des drehbeweglich auf dem Touchpad 3 angeordneten Betätigungsteil 2 angeordnet ist und sich in einem elektromagnetischen Wechselfeld einer am Touchpad 3 angeordneten und nicht näher gezeigten Detektionseinrichtung befindet. Die Schwingkreiselemente 8a, 8b sind auf einer zum Sockel 21 gehörigen Leiterplatte 22 angeordnet. Es ist eine Rasteinrichtung aus einer am Sockel 21 ausgebildeten Rastkontur 18 und einer mit der Rastkontur 18 in Eingriff stehenden und die Rastkontur 18 ablaufenden, am Betätigungsteil 2 festgelegten Rastnase 17 vorgesehen, um die dezidierten Stellungen des Betätigungsteils 2 vorzugeben. Das elektromechanische Schaltelement 16 ist als Schleifkontaktierung 19, 20 ausgebildet und weist mehrere Schleifer 20 auf, die stellungsabhängig mit bestimmten Kontaktflächen 19 der Leiterplatte 22 des Sockels 21 in elektrischem Kontakt stehen. Die Schleifer 20 sind hier zur konstruktiven Vereinfachung einstückig mit der Rastnase 17 aus einem Federblech ausgebildet. Im vorliegenden Fall wird über zwei Schleifer 20 durch Schleifkontaktierung eine geschlossen umlaufende Kontaktfläche stellungsabhängig mit jeweils einer Kontaktfläche 19 elektrisch verbunden. Die durch die Schleifkontaktierung 19, 20 stellungsabhängig geschlossenen Schwingkreise 8 sind so ausgebildet, dass sich zumindest für benachbarte Stellungen des Betätigungsteils 2 unterschiedliche und detektierbare Resonanzfrequenzen aufgrund unterschiedlicher Impedanzen der jeweils durch die Schleifkontaktierung 19, 20 verschalteten Schwingkreiselemente 8b ergeben. Bevorzugt ist für jede mögliche Stellung eine spezifische Resonanzfrequenz durch entsprechende Verschaltung vorgesehen. Beispielsweise wird dies durch Gray-Codierung erreicht. Die Sendeeinrichtung der nicht dargestellten Detektionseinrichtung kann genau eine als Sendeantenne fungierende Sendespule aufweisen. Diese ist beispielsweise benachbart der Spule 8a auf der Drehachse D angeordnet. Es kann aber auch ein Array von selektiv ansteuerbaren Sendeantennen vorgesehen sein und die Empfangseinrichtung der Detektionseinrichtung ein Array von selektiv ansteuerbaren Empfangsantennen aufweisen, wobei die Detektionseinrichtung ausgelegt ist, mittels selektiver Ansteuerung dieser Antennen die Lage des Betätigungsteils 2 bezüglich des Touchpads 3 als zusätzliche Lageinformation zu ermitteln. Ferner ist das Eingabegerät 1 aufgrund der räumlichen Verteilung der Sende- bzw. Empfangsantennen in der Lage, eine ortsauflösende Ermittlung des stellungsabhängigen Absorptionsverhaltens bzw. des stellungsabhängigen Abstrahlverhaltens durchzuführen, was die Genauigkeit der Stellungsdetektion steigert. Beispielsweise kann die Ansteuerung so ausgelegt sein, dass die Antennen entsprechend der zuvor detektierten Stellung des Betätigungsteils 2 entsprechend ihres Abstands zur zuletzt detektierten Stellung des Betätigungsteils 2 selektiert werden, so dass die zur Detektion verwendeten Antennen der jeweiligen Stellung des Betätigungsteils 2 "nachgeführt" werden.

## Patentansprüche

1. Eingabegerät (1), insbesondere einer Fahrzeug-Bediener-Schnittstelle, aufweisend ein Touchpad (3), einen an dem Touchpad (3) befestigten Sockel (21), ein beweglich, wie dreh-, schwenk- und/oder schiebebeweglich, an dem Sockel (21) gelagertes Betätigungsteil (2) und einer am Touchpad (3) angeordneten Detektionseinrichtung (4, 6, 7), welche eine Sendeeinrichtung (6) zur Erzeugung eines elektromagnetischen Wechselfeldes mittels eines Sendesignals (9) und eine Empfangseinrichtung (7) zum Empfang des elektromagnetischen Wechselfeldes unter Erzeugung eines Empfangssignals (12) aufweist, und einer mit der Detektionseinrichtung (4, 6,7) elektrisch leitend verbundenen Auswerteinheit (5); einen im elektromagnetischen Wechselfeld angeordneten, elektrischen Schwingkreis (8), wobei das Betätigungsteil (2) ausgebildet ist, eine Resonanzfrequenz des elektrischen Schwingkreises (8) stellungsabhängig zu variieren, und die Auswerteinheit (5) ausgelegt ist, anhand wenigstens des Empfangssignals (12) ein stellungsabhängiges Absorptionsverhalten des Schwingkreises (8) bezüglich des elektromagnetischen Wechselfeldes oder ein stellungsabhängiges Abstrahlverhalten des Schwingkreises (8) aufgrund eines in dem Schwingkreis (8) induzierten Stromes, insbesondere daraus die Resonanzfrequenz, zu detektieren und daraus eine Stellungsinformation betreffend die Stellung des Betätigungsteils (2) zu ermitteln, und wobei die Auswerteinheit (5) ausgelegt ist, in Abhängigkeit der Stellungsinformation eine Schalt- und/oder Steuerfunktion durchzuführen, wobei der elektrische Schwingkreis (8) ein elektromechanisches Schaltelement aufweist und das Betätigungsteil (2) und das Schaltelement derart mechanisch zusammenwirken, dass stellungsabhängig der elektrische Schwingkreis (8) geschlossen oder unterbrochen wird und wobei das elektromechanische Schaltelement (16) zur Schleifkontaktierung (19, 20) ausgebildet ist und mindestens einen Schleifer (20) aufweist, der synchron zu einer Verstellung des Betätigungsteils (2) auf und über eine Kontaktfläche (19) einer Leiterplatte (22) des Sockels (21) hinweg verfahren wird, um bei sich einstellendem Berührkontakt den Schwingkreis (8) zu schließen, so dass stellungsabhängig der Schwingkreis (8) geschlossen oder unterbrochen wird.

2. Eingabegerät (1) gemäß Anspruch 1, wobei mehrere Schwingkreiselemente (8a, 8b) vorgesehen sind und das Betätigungsteil (2) und der elektrische Schwingkreis (8) zusammenwirken, dass wenigstens zwei benachbarte Stellungen des Betätigungsteils (2) vorgesehen sind, in denen jeweils unterschiedliche elektrische Schwingkreise (8) geschlossen sind, die sich wenigstens bezüglich der Impedanz eines Schwingkreiselements (8b) der jeweils zum betreffenden Schwingkreis elektrisch verbundenen Schwingkreiselemente (8a, 8b) unterscheiden.

3. Eingabegerät (1) gemäß dem vorhergehenden Anspruch, wobei die Stellungen des Betätigungsteils (2) durch eine Rasteinrichtung (17, 18) definiert sind.

4. Eingabegerät (1) gemäß einem der vorhergehenden Ansprüche, wobei anhand eines Frequenzverhaltens eines Amplitudenverhältnisses zwischen Sendesignal (9) und Empfangssignal (12) und/oder eines Frequenzverhaltens einer Phasenverschiebung zwischen Sendesignal (9) und Empfangssignal (12) eine Stellungsinformation mittels der Auswerteinheit (5) ermittelt wird.

5. Eingabegerät (1) gemäß einem der vorhergehenden Ansprüche, wobei die Sendeeinrichtung (6) ein Array von selektiv ansteuerbaren Sendeantennen (6) und/oder die Empfangseinrichtung (7) ein Array von selektiv ansteuerbaren Empfangsantennen aufweist und die Detektionseinheit (4, 6, 7) ausgelegt ist, mittels selektiver Ansteuerung ferner die Lage wenigstens eines Schwingkreiselementes eines stellungsabhängig geschlossenen Schwingkreises (8) zu detektieren um eine Lage des Betätigungsteils (2) auf dem Touchpad (3) zu ermitteln.

6. Verfahren zum Betrieb eines Eingabegeräts (1), insbesondere einer Fahrzeug-Benutzer-Schnittstelle (10), mit den folgenden Schritten:
Bereitstellen des Eingabegeräts (1), aufweisend ein Touchpad (3), einen an dem Touchpad (3) befestigten Sockel (21), ein beweglich, wie dreh-, schwenk- und/oder schiebebeweglich an dem Sockel (21) gelagertes Betätigungsteil (2) und einer am Touchpad (3) angeordneten Detektionseinrichtung (4, 6, 7), welche eine Sendeeinrichtung (6) zur Erzeugung eines elektromagnetischen Wechselfeldes mittels eines Sendesignals (9) und eine Empfangseinrichtung (7) zum Empfang des elektromagnetischen Wechselfeldes unter Erzeugung eines Empfangssignals (12) aufweist, und einer mit der Detektionseinrichtung (4, 6, 7) elektrisch leitend verbundenen Auswerteinheit (5); einen im elektromagnetischen Wechselfeld angeordneten, elektrischen Schwingkreis (8), wobei das Betätigungsteil (2) ausgebildet ist, eine Resonanzfrequenz des elektrischen Schwingkreises (8) stellungsabhängig zu variieren; und Detektieren anhand wenigstens des Empfangssignals (12) und mittels der Auswerteinheit (5) eines stellungsabhängigen Absorptionsverhaltens des Schwingkreises (8) bezüglich des elektromagnetischen Wechselfeldes oder eines stellungsabhängigen Abstrahlverhaltens des Schwingkreises (8) aufgrund eines in dem Schwingkreis (8) induzierten Stromes, insbesondere Detektion von dessen Resonanzfrequenz, und Ermitteln einer Stellungsinformation betreffend die Stellung des Betätigungsteils (2) aus dem stellungsabhängigen Absorptionsverhalten oder dem stellungsabhängigen Abstrahlverhalten durch die Auswerteinheit (5); und
Ausführen einer Schalt- und/oder Steuerfunktion in Abhängigkeit der Stellungsinformation durch die Auswerteinheit (5) wobei der elektrische Schwingkreis (8) ein elektromechanisches, zur Schleifkontaktierung (19, 20) ausgebildetes Schaltelement (16) mit mindestens einem Schleifer (20) aufweist, der synchron zu einer Verstellung des Betätigungsteils (2) auf und über eine Kontaktfläche (19) einer Leiterplatte (22) des Sockels (21) hinweg verfahren wird, um bei sich einstellendem Berührkontakt den Schwingkreis (8) zu schließen, so dass stellungsabhängig der elektrische Schwingkreis (8) geschlossen oder unterbrochen wird.

7. Verfahren gemäß dem vorhergehenden Anspruch, wobei anhand eines Frequenzverhaltens eines Amplitudenverhältnisses zwischen Sendesignal (9) und Empfangssignal (12) und/oder eines Frequenzverhaltens einer Phasenverschiebung zwischen Sendesignal (9) und Empfangssignal (12) eine Stellungsinformation mittels der Auswerteinheit (5) ermittelt wird.

8. Verfahren gemäß einem der vorhergehenden Ansprüche 6 oder 7, wobei mehrere Schwingkreiselemente (8a, 8b) vorgesehen sind und das Betätigungsteil (2) und der elektrische Schwingkreis (8) zusammenwirken, dass wenigstens zwei benachbarte Stellungen des Betätigungsteils (2) vorgesehen sind, in denen jeweils unterschiedliche elektrische Schwingkreise (8) geschlossen sind, die sich wenigstens bezüglich der Impedanz eines Schwingkreiselements der jeweils zum betreffenden Schwingkreis elektrisch verbundenen Schwingkreiselemente (8a, 8b) unterscheiden.

9. Verfahren gemäß dem vorhergehenden Anspruch, wobei die Stellungen des Betätigungsteils (2) durch eine Rasteinrichtung definiert sind.

10. Verfahren gemäß einem der vorhergehenden Ansprüche 6 bis 9, wobei die Sendeeinrichtung (6) ein Array von selektiv ansteuerbaren Sendeantennen (6) und/oder die Empfangseinrichtung (7) ein Array von selektiv ansteuerbaren Empfangsantennen aufweist und die Detektionseinheit (4, 6, 7) ausgelegt ist, mittels selektiver Ansteuerung ferner die Lage wenigstens eines Schwingkreiselementes eines stellungsabhängig geschlossenen Schwingkreises (8) zu detektieren, um eine Lage des Betätigungsteils (2) auf dem Touchpad (3) zu ermitteln.

## Claims

1. Input apparatus (1), in particular of a vehicle-operator interface, comprising a touchpad (3), a pedestal (21) secured to the touchpad (3), an actuation part (2) mounted movably, such as rotatably, pivotably and/or slidably movably, on the pedestal (21), and a detection device (4, 6, 7), which is arranged on the touchpad (3) and which comprises a transmitting device (6) for generating an alternating electromagnetic field by means of a transmission signal (9) and a receiving device (7) for receiving the alternating electromagnetic field with generation of a reception signal (12), and an evaluation unit (5), which is electrically conductively connected to the detection device (4, 6, 7); an electrical resonant circuit (8) arranged in the alternating electromagnetic field, wherein the actuation part (2) is configured to vary a resonant frequency of the electrical resonant circuit (8) in a position-dependent manner, and the evaluation unit (5) is designed, on the basis of at least the reception signal (12), to detect a position-dependent absorption behaviour of the resonant circuit (8) with respect to the alternating electromagnetic field or a position-dependent emission behaviour of the resonant circuit (8) on account of a current induced in the resonant circuit (8), more particularly to detect the resonant frequency therefrom, and to determine therefrom position information relating to the position of the actuation part (2), and wherein the evaluation unit (5) is designed to perform a switching and/or control function depending on the position information, wherein the electrical resonant circuit (8) comprises an electromechanical switching element and the actuation part (2) and the switching element mechanically cooperate in such a way that the electrical resonant circuit (8) is closed or interrupted in a position-dependent manner, and wherein the electromechanical switching element (16) is configured for sliding contacting (19, 20) and comprises at least one slider (20) which is moved synchronously with an adjustment of the actuation part (2) onto and across a contact surface (19) of a printed circuit board (22) of the pedestal (21) in order to close the resonant circuit (8) upon touching contact being established, such that the resonant circuit (8) is closed or interrupted in a position-dependent manner.

2. Input apparatus (1) according to Claim 1, wherein a plurality of resonant circuit elements (8a, 8b) are provided and the actuation part (2) and the electrical resonant circuit (8) cooperate such that at least two adjacent positions of the actuation part (2) are provided in which different electrical resonant circuits (8) are closed in each case, which differ at least with regard to the impedance of a resonant circuit element (8b) of the resonant circuit elements (8a, 8b) which are electrically connected in each case to form the relevant resonant circuit.

3. Input apparatus (1) according to the preceding claim, wherein the positions of the actuation part (2) are defined by a latching device (17, 18).

4. Input apparatus (1) according to any of the preceding claims, wherein position information is determined by means of the evaluation unit (5) on the basis of a frequency response of an amplitude ratio between transmission signal (9) and reception signal (12) and/or a frequency response of a phase shift between transmission signal (9) and reception signal (12).

5. Input apparatus (1) according to any of the preceding claims, wherein the transmitting device (6) comprises an array of selectively controllable transmitting antennas (6) and/or the receiving device (7) comprises an array of selectively controllable receiving antennas and the detection unit (4, 6, 7) is designed, by means of selective control, furthermore to detect the location of at least one resonant circuit element of a position-dependently closed resonant circuit (8), in order to determine a location of the actuation part (2) on the touchpad (3).

6. Method for operating an input apparatus (1), in particular of a vehicle-user interface (10), comprising the following steps:
providing the input apparatus (1), comprising a touchpad (3), a pedestal (21) secured to the touchpad (3), an actuation part (2) mounted movably, such as rotatably, pivotably and/or slidably movably, on the pedestal (21), and a detection device (4, 6, 7), which is arranged on the touchpad (3) and which comprises a transmitting device (6) for generating an alternating electromagnetic field by means of a transmission signal (9) and a receiving device (7) for receiving the alternating electromagnetic field with generation of a reception signal (12), and an evaluation unit (5), which is electrically conductively connected to the detection device (4, 6, 7); an electrical resonant circuit (8) arranged in the alternating electromagnetic field, wherein the actuation part (2) is configured to vary a resonant frequency of the electrical resonant circuit (8) in a position-dependent manner; and detecting, on the basis of at least the reception signal (12) and by means of the evaluation unit (5), a position-dependent absorption behaviour of the resonant circuit (8) with respect to the alternating electromagnetic field or a position-dependent emission behaviour of the resonant circuit (8) on account of a current induced in the resonant circuit (8), more particularly detecting the resonant frequency thereof, and determining position information relating to the position of the actuation part (2) from the position-dependent absorption behaviour or the position-dependent emission behaviour by way of the evaluation unit (5); and
implementing a switching and/or control function depending on the position information by way of the evaluation unit (5), wherein the electrical resonant circuit (8) comprises an electromechanical switching element (16), configured for sliding contacting (19, 20), with at least one slider (20) which is moved synchronously with an adjustment of the actuation part (2) onto and across a contact surface (19) of a printed circuit board (22) of the pedestal (21) in order to close the resonant circuit (8) upon touching contact being established, such that the electrical resonant circuit (8) is closed or interrupted in a position-dependent manner.

7. Method according to the preceding claim, wherein position information is determined by means of the evaluation unit (5) on the basis of a frequency response of an amplitude ratio between transmission signal (9) and reception signal (12) and/or a frequency response of a phase shift between transmission signal (9) and reception signal (12).

8. Method according to either of the preceding Claims 6 and 7, wherein a plurality of resonant circuit elements (8a, 8b) are provided and the actuation part (2) and the electrical resonant circuit (8) cooperate such that at least two adjacent positions of the actuation part (2) are provided in which different electrical resonant circuits (8) are closed in each case, which differ at least with regard to the impedance of a resonant circuit element of the resonant circuit elements (8a, 8b) which are electrically connected in each case to form the relevant resonant circuit.

9. Method according to the preceding claim, wherein the positions of the actuation part (2) are defined by a latching device.

10. Method according to any of the preceding Claims 6 to 9, wherein the transmitting device (6) comprises an array of selectively controllable transmitting antennas (6) and/or the receiving device (7) comprises an array of selectively controllable receiving antennas and the detection unit (4, 6, 7) is designed, by means of selective control, furthermore to detect the location of at least one resonant circuit element of a position-dependently closed resonant circuit (8), in order to determine a location of the actuation part (2) on the touchpad (3).

## Revendications

1. Dispositif d'entrée (1), en particulier interface utilisateur-véhicule, comportant un pavé tactile (3), une base (21) fixée au pavé tactile (3), une partie d'actionnement (2) mobile, par exemple rotative, pivotante et/ou coulissante, montée sur la base (21) et un module de détection (4, 6, 7) qui est disposé sur le pavé tactile (3) et qui comporte un module d'émission (6) destiné à générer un champ électromagnétique alternatif au moyen d'un signal d'émission (9) et un module de réception (7) destiné à recevoir le champ électromagnétique alternatif tout en générant un signal de réception (12), et une unité d'évaluation (5) reliée électriquement au module de détection (4, 6, 7) ; un circuit oscillant électrique (8) disposé dans le champ électromagnétique alternatif, la partie d'actionnement (2) étant conçue pour faire varier une fréquence de résonance du circuit oscillant électrique (8) en fonction de la position, et l'unité d'évaluation (5) étant conçue pour détecter, à l'aide au moins du signal de réception (12), un comportement en termes d'absorption, en fonction de la position, du circuit oscillant (8) par rapport au champ électromagnétique alternatif ou un comportement en termes de rayonnement, en fonction de la position, du circuit oscillant (8) sur la base d'un courant induit dans le circuit oscillant (8), en particulier à partir de là la fréquence de résonance, et pour déterminer à partir de là une information de position relative à la position de la partie d'actionnement (2), et l'unité d'évaluation (5) étant conçue pour exécuter une fonction de commutation et/ou de commande en fonction de l'information de position, le circuit oscillant électrique (8) comportant un élément de commutation électromécanique et la partie d'actionnement (2) et l'élément de commutation coopérant mécaniquement de manière à ce que le circuit oscillant électrique (8) soit fermé ou interrompu en fonction de la position et l'élément de commutation électromécanique (16) étant conçu pour réaliser un contact par frottement (19, 20) et comportant au moins un frotteur (20) qui est déplacé de manière synchrone avec un réglage de la partie d'actionnement (2) sur et par-dessus une surface de contact (19) d'une carte de circuit imprimé (22) de la base (21) afin de fermer le circuit oscillant (8) lorsque le contact est établi de sorte que le circuit oscillant (8) soit fermé ou interrompu selon la position.

2. Dispositif d'entrée (1) selon la revendication 1, plusieurs éléments de circuit oscillant (8a, 8b) étant prévus et la partie d'actionnement (2) et le circuit oscillant électrique (8) coopérant de façon à prévoir au moins deux positions adjacentes de la partie d'actionnement (2) dans lesquelles différents circuits oscillants électriques (8) sont chacun fermés qui diffèrent au moins par l'impédance d'un élément de circuit oscillant (8b) des éléments de circuit oscillant (8a, 8b) reliés électriquement au circuit oscillant respectif.

3. Dispositif d'entrée (1) selon la revendication précédente, les positions de la partie d'actionnement (2) étant définies par un module d'encliquetage (17, 18).

4. Dispositif d'entrée (1) selon l'une des revendications précédentes, une information de position étant déterminée par l'unité d'évaluation (5) sur la base d'une réponse en fréquence d'un rapport d'amplitude entre le signal d'émission (9) et le signal de réception (12) et/ou d'une réponse en fréquence d'un déphasage entre le signal d'émission (9) et le signal de réception (12).

5. Dispositif d'entrée (1) selon l'une des revendications précédentes, le module d'émission (6) comportant un réseau d'antennes d'émission (6) pouvant être commandées sélectivement et/ou le module de réception (7) comportant un réseau d'antennes de réception pouvant être commandées sélectivement et l'unité de détection (4, 6, 7) étant conçue pour détecter en outre, par une commande sélective, la position d'au moins un élément de circuit oscillant d'un circuit oscillant (8), fermé en fonction de la position, afin de déterminer une position de la partie d'actionnement (2) sur le pavé tactile (3).

6. Procédé de fonctionnement d'un dispositif d'entrée (1), en particulier d'une interface utilisateur-véhicule (10), ledit procédé comprenant les étapes suivantes :
fournir le dispositif d'entrée (1), qui comporte un pavé tactile (3), une base (21) fixée au pavé tactile (3), une partie d'actionnement (2) mobile, par exemple rotative, pivotante et/ou coulissante, montée sur la base (21) et un module de détection (4, 6, 7) qui est disposé sur le pavé tactile (3) et qui comporte un module d'émission (6) destiné à générer un champ électromagnétique alternatif au moyen d'un signal d'émission (9) et un module de réception (7) destiné à recevoir le champ électromagnétique alternatif tout en générant un signal de réception (12), et une unité d'évaluation (5) reliée électriquement au module de détection (4, 6, 7) ; un circuit oscillant électrique (8) disposé dans le champ électromagnétique alternatif, la partie d'actionnement (2) étant conçue pour faire varier une fréquence de résonance du circuit oscillant électrique (8) en fonction de la position ; et détecter, à l'aide au moins du signal de réception (12) et au moyen de l'unité d'évaluation (5), un comportement en termes d'absorption, en fonction de la position, du circuit oscillant (8) par rapport au champ électromagnétique alternatif ou un comportement en termes de rayonnement, en fonction de la position, du circuit oscillant (8) sur la base d'un courant induit dans le circuit oscillant (8), en particulier la détection de la fréquence de résonance de celui-ci, et déterminer une information de position relative à la position de la partie d'actionnement (2) à partir du comportement en termes d'absorption, en fonction de la position, ou du comportement en termes de rayonnement, en fonction de la position, par le biais de l'unité d'évaluation (5) ; et
exécuter une fonction de commutation et/ou de commande en fonction de l'information de position par le biais de l'unité d'évaluation (5), le circuit oscillant électrique (8) comportant un élément de commutation électromécanique (16) conçu pour réaliser un contact par frottement (19, 20) avec au moins un frotteur (20) qui est déplacé de manière synchrone avec un réglage de la partie d'actionnement (2) sur et par-dessus une surface de contact (19) d'une carte de circuit imprimé (22) de la base (21) afin de fermer le circuit oscillant (8) lorsque le contact est établi de sorte que le circuit oscillant (8) soit fermé ou interrompu selon la position.

7. Procédé selon la revendication précédente, une information de position étant déterminée par l'unité d'évaluation (5) sur la base d'une réponse en fréquence d'un rapport d'amplitude entre le signal d'émission (9) et le signal de réception (12) et/ou d'une réponse en fréquence d'un déphasage entre le signal d'émission (9) et le signal de réception (12).

8. Procédé selon l'une des revendications précédentes 6 et 7, plusieurs éléments de circuit oscillant (8a, 8b) étant prévus et la partie d'actionnement (2) et le circuit oscillant électrique (8) coopérant de façon à prévoir au moins deux positions adjacentes de la partie d'actionnement (2) dans lesquelles différents circuits oscillants électriques (8) sont chacun fermés qui diffèrent au moins par l'impédance d'un élément de circuit oscillant des éléments de circuit oscillant (8a, 8b) reliés électriquement au circuit oscillant respectif.

9. Procédé selon la revendication précédente, les positions de la partie d'actionnement (2) étant définies par un module d'encliquetage.

10. Procédé selon l'une des revendications précédentes 6 à 9, le module d'émission (6) comportant un réseau d'antennes d'émission (6) pouvant être commandées sélectivement et/ou le module de réception (7) comportant un réseau d'antennes de réception pouvant être commandées sélectivement et l'unité de détection (4, 6, 7) étant conçue pour détecter en outre, par une commande sélective, la position d'au moins un élément de circuit oscillant d'un circuit oscillant (8), fermé en fonction de la position, afin de déterminer une position de la partie d'actionnement (2) sur le pavé tactile (3).
